# EUROPEAN PATENT APPLICATION

(11) **EP 0 679 822 A1**
(43) Date of publication of application: **02.11.1995**
(21) Application number: 95105477.4
(22) Date of filing: 12.04.1995
(51) Int. Cl.: F16K 17/04

(54) **Diaphragm safety relief valve**

(30) Priority: 28.04.1994 IT MI940306 U
(71) Applicant: INTERMES S.p.A., I-39052 Caldaro (Bolzano) (IT)
(72) Inventor: Chiarotti, Vilmo Romano, I-38085 Povo (TN) (IT)
(74) Representative: Zavattoni Gusmeroli, Maria Chiara

(57) **Abstract**

A pressure relief or safety valve (10) comprising a seat (20) for the valve shut-off member between an opening (14) for connection with the pipe that is to be protected and an exhaust opening (16), has the diaphragm member (22) supported on a guide bush (34) which is axially slidable along a cap (26) engaged with a control knob (46). The axial sliding of the bush in the cap is doubly guided by a sliding engagement between a cylindrical seating of the cap that houses a stem integral with the bush and a cylindrical outer surface of the skirt of the bush which engages an inner cylindrical surface of the cap. A pressure spring (44) is interposed between cap and bush to press the valve shut-off member in the closed position.

## Description

The present application relates to a pressure relief valve or safety valve against overpressures in pipes.

Safety valves are known which comprise a diaphragm-type shut-off member resiliently pressed against a seat disposed between an opening designed to be connected to the pipe that is to be protected against overpressures and an escape opening. A safety valve of this known type has the diaphragm shut-off member supported by a spring-biassed movable bush; the bush is movable along an axis defined by a pin integral with a knob and coinciding with the geometrical axis of the spring; however, it has been found that the movement of the bush and the shut-off member, not being efficiently guided, causes irregular operation and at times brings the valve into operation at pressures other than those for which it is calibrated.

The aim of the present invention is to overcome the drawbacks of the prior art by providing a valve that is able to enter into operation at precise calibration values.

This aim has been achieved with a valve according to claim 1. Further new and interesting features are stated in the subsequent claims.

The new valve comprises a body having an inlet connector for connection to the pipe to be protected against overpressures and an outlet connector communicating with each other, a seat for a shut-off member disposed between said connectors, a diaphragm pressure-containing member co-operating with said seat, a movable bush supporting said diaphragm shut-off member, a cap mounted on said body, a pressure spring acting between said cap and said bush. A first sliding guide coupling is provided between a cylindrical part of the cap and a stem integral with the bush and a second sliding guide coupling concentric with the first between an inner cylindrical surface of the cap and an outer surface of the bush skirt. The calibration is determined by the dimensions of the components and the intrinsic characteristics of the spring.

The new valve allows precise calibration and enters into operation precisely at the specified pressure, also giving rise to vibration-free operation.

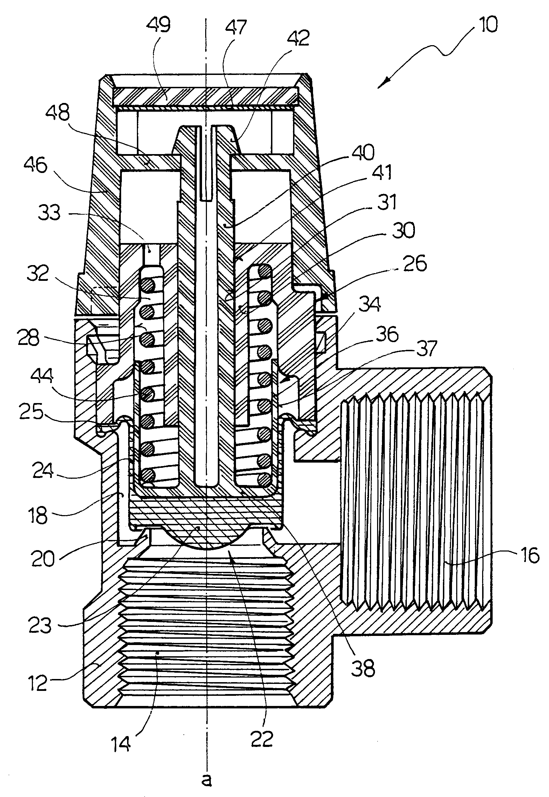

An embodiment of the invention will be described below, purely by way of non-limiting example, with reference to the attached drawing, which is an axial sectional view of a valve.

A valve according to the invention is indicated as a whole by the reference number 10. It comprises a valve body 12 which has an inlet connector part or inlet opening 14, for connection to the pipe that is to be protected against overpressures, an outlet connector part or outlet opening 16 for pressure relief, and a housing 18 for a shut-off member and related elements. The body also forms a valve seat 20, generally consisting of an annular projection disposed between the inlet connector and the outlet connector. A diaphragm shut-off member of the valve is indicated by reference number 22 and is cup-shaped, with a thicker central part and thin walls having a peripheral edge 25 turned outward and fixed in a special groove in the valve body. The outer edge 25 is blocked in position by a cup-shaped cap 26, which has an inner cylindrical guide wall 28 and an inner cylindrical projection 30 with inner guide wall 31, set at a distance from each other so as to leave a housing 32 for a spring, which will be described below, said housing communicating with a space above the cap through one or more holes 33. A bush supporting the shut-off member is indicated as a whole by 34 and it, too, is cup-shaped with an outer skirt 36 having an outer guide surface 37, generally cylindrical, a bottom wall 38 designed to be applied against a portion 23 of the shut-off diaphragm, and a guide stem 40. This is preferably generally hollow, with an outer guide surface 41, and has a flexible forked end 42 with locking teeth. A pressure spring indicated by 44 is housed and acts between cap 26 and bush 34. A knob 46 is engaged on the cap 26 and has a partition wall 48 with a hole into which the end 42 of the stem 40 is snap engaged. An upper plate 47 housed on the knob preferably bears indications as to dimensions and calibration and is covered by a protective plate 49. Calibration of the valve is done during assembly and depends solely on the dimensions of parts 12, 22, 34 and 26 and on the characteristics of the spring 44.

The valve works as follows.

When a pressure below that specified is applied to the connection 14, the spring 44 presses the bush 34 and thus the shut-off member 22 against the seating 20, preventing communication between the pipe connector 14 and the exhaust connector 16. When the specified pressure is exceeded in the pipe connected to the connector 14, the pressure moves the pressure-containing member 22 along the axis a against the force of the spring 44, opening a passage toward the exhaust connector 16. Movement of the shut-off member 23 between the closed position and the open position and vice versa is guided by the reciprocal sliding engagement of surfaces 31 and 14 and surfaces 28 and 37.

The safety valve offers the possibility of manual pressure relief by maneuvering the knob 46. The knob is provided with a cam (not illustrated) in the lower inner part, which acts on three projections on the outer diameter of the cap 26 (not illustrated); when the knob is rotated it therefore moves upwards, drawing with it the bush 34, thus allowing relief of the pressure.

The cam structure of the knob and the returning force of the spring allow the valve to reclose automatically when the knob is released by the operator.

## Claims

1. A diaphragm-type safety or pressure relief valve comprising a body (12) with an opening or connector part (14) for a pipe that is to be protected against overpressures and an exhaust opening or connector part, said openings communicating with each other; a seat (20) for a shut-off member of the valve, a diaphragm shut-off member (22) that is movable between a position against said seat, in which it closes the passage from the first connector part to the second connector part, and a position at a distance from said seat, in which it leaves said passage open; a guide bush (34) supporting said shut-off member; a cap (26) retaining the peripheral edge (25) of said shut-off member on the body; a spring (44) acting between said bush and said cap to press the shut-off member against the seat
characterized in that
said bush (34) has an inner stem part (40) having a guide surface (41) and said cap has a cylindrical part with a cylindrical guide surface (31) co-operating with said guide surface (41) on the stem of the bush; and said cap (26) is cup-shaped with a cylindrical guide surface (28) and said bush (34) is cup-shaped with a skirt (24) with a cylindrical guide surface (36) co-operating with the cylindrical surface (28) of the cap.

2. A valve according to claim 1 characterized in that the cap has one or more through-holes (33) in its bottom wall.

3. A valve according to claim 1 characterized in that it also comprises a knob (46) connected to the stem (42) of the bush and movable between a lowered position, in which it leaves the shut-off member (22) free to move into the closed position of the seat and a raised position or at a distance from the body, in which it obliges the pressure-containing diaphragm to move away from the seat.

4. A valve according to claim 3 in which the movement between said positions of the knob is obtained by means of a cam coupling between knob and cap.

5. A valve according to claim 3 characterized by the fact that the knob comprises a plate (47) indicating the calibration covered by a protective plate (49).

6. A valve according to claim 1 characterized in that the calibration is fixed and is conferred by the dimensions of the body, the diaphragm, the bush and the cap, and by the characteristics of the spring.

7. A valve according to claim 1, characterized by the fact that the coupling between body and cap, with relative blocking of the outer edge (25) of the pressure-containing diaphragm is obtained by compression with insertion of the cap in the body; said cap has some flexible peripheral ribs which are inserted in the groove present in the body.

8. A valve according to claim 1, characterized by the fact that diaphragm and pressure-containing member are a single unit, with special shaping.
